# EUROPEAN PATENT APPLICATION

(11) **EP 4 412 275 A1**
(43) Date of publication of application: **07.08.2024**
(21) Application number: 21959404.1
(22) Date of filing: 30.09.2021
(51) Int. Cl.: H04W 16/26, H04W 16/28, H04W 28/06, H04W 52/42

(54) **WIRELESS NODE AND WIRELESS COMMUNICATION SYSTEM**

(71) Applicant: NTT DOCOMO, INC., Tokyo 100-6150 (JP)
(72) Inventor: KURITA, Daisuke, Tokyo 100-6150 (JP); HARADA, Hiroki, Tokyo 100-6150 (JP)
(74) Representative: Hoffmann Eitle
(86) International application number: PCT/JP2021/036201
(87) International publication number: WO 2023/053367

(57) **Abstract**

A radio node according to an aspect of the present disclosure includes: a transmission section that reports, to a parent node, information indicating a simultaneous transmission in which transmission to the parent node and transmission to a child node or a terminal are simultaneously performed and/or a simultaneous reception in which reception from the parent node and reception from the child node or the terminal are simultaneously performed; and a control section that controls the simultaneous transmission and/or the simultaneous reception in accordance with configuration made by the parent node in response to the information.

## Description

### Technical Field

The present disclosure relates to a radio node and a radio communication method.

### Background Art

Long Term Evolution (LTE) has been specified for achieving a higher data rate, lower latency, and the like in a Universal Mobile Telecommunication System (UMTS) network. Future systems of LTE have also been studied for achieving a broader bandwidth and a higher speed based on LTE. Examples of the future systems of LTE include systems called LTE-Advanced (LTE-A), Future Radio Access (FRA), 5th generation mobile communication system (5G), 5G plus (5G+), Radio Access Technology (New-RAT), New Radio (NR), and the like.

Further, in NR, a technique of Integrated Access and Backhaul (IAB) that unifies an access link and a backhaul link ihas been studied. In IAB, a radio node such as an IAB node forms a radio access link with a user terminal (User Equipment (UE): may be simply referred to as terminal) and also forms a radio backhaul link with another IAB node and/or a radio base station.

An IAB node has a Mobile Termination (MT), which is a function for being connected to a parent node (another IAB node positioned one level upstream), and a Distributed Unit (DU), which is a function for being connected to with a child node (still another IAB node positioned one level downstream) or a terminal. Note that, in the following, the MT of the IAB node may be denoted by an "IAB-MT," and the DU of the IAB node may be denoted by an "IAB-DU."

In Release 16 of 3GPP, radio access and radio backhaul are based on half-duplex communication and time division multiplexing (TDM). Meanwhile, in Release 17 and a later release, space division multiplexing (SDM) and frequency division multiplexing (FDM) have been studied.

In Non-Patent Literature (hereinafter referred to as "NPL") 1, the following seven cases are specified with respect to transmission timing alignment (Timing Alignment (TA)) for an IAB node:
- Case #1: Downlink (DL) transmission TA between an IAB node and an IAB donor;
- Case #2: DL and Uplink (UL) transmission TA within the IAB node;
- Case #3: DL and UL reception TA within the IAB node;
- Case #4: Transmission by Case #2 and reception by Case #3 within the IAB node;
- Case #5: Application of Case #1 to an access link timing and application of Case #4 to a backhaul link timing within the IAB node in different time slots;
- Case #6: DL transmision TA in Case #1 and UL transmision TA in Case #2 (i.e., combination of Case #1 DL transmision TA and Case #2 UL transmision TA); and
- Case #7: DL transmision TA in Case #1 and UL reception TA in Case #3 (i.e., combination of Case #1 DL transmision TA and Case #3 UL reception TA).

Note that the term "alignment" may be replaced with another term such as adjustment, arraying, position adjustment, position alignment, or synchronization.

In Release 17 of 3GPP, a simultaneous transmission and a simultaneous reception by an IAB-MT and an IAB-DU (hereinafter may also be simply referred to as simultaneous transmission and simultaneous reception), and the like on a case where the IAB-MT and the IAB-DU share a single antenna panel, transceiver, or the like have been discussed, by applying Space Division Multiplexing (SDM) and Frequency Division Multiplexing (FDM).

Further, Duplexing enhancement has been agreed as one of the extension of an IAB function in Release 17 of 3GPP. In NPL 2, as such Duplexing enhancement, it has been studied to extend resource multiplexing between a child link and a parent link of an IAB node, including supporting a simultaneous operation of the child link and the parent link of the IAB node (i.e., simultaneous transmission, simultaneous reception, simultaneous IAB-MT reception and IAB-DU transmission, and simultaneous IAB-MT transmission and IAB-DU reception described above).

### Citation List

### Non-Patent Literature

NPL 1
   3GPP TS 38.874 V16.0.0 (2018-12)
NPL 2
   "New WID on Enhancements to Integrated Access and Backhaul," RP-193251, 3GPP TSG RAN Meeting #86, 3GPP, December 2019
NPL 3
   "Session notes for 8.10 (Enhancements to Integrated Access and Backhaul)," 3GPP TSG RAN WG1 Meeting #104-e, 3GPP, January-February 2021

### Summary of Invention

There is scope for study on, however, report or configuration (indication) of information on multiplexing relating to a simultaneous operation (in particular, simultaneous transmission and/or simultaneous reception) between a child link and a parent link of an IAB node.

An aspect of the present disclosure is to provide a radio node and a radio communication method each capable of appropriately performing a report or configuration of information on multiplexing relating to a simultaneous transmission and/or a simultaneous reception.

A radio node according to an aspect of the present disclosure includes: a transmission section that reports, to a parent node, information indicating a simultaneous transmission in which transmission to the parent node and transmission to a child node or a terminal are simultaneously performed and/or a simultaneous reception in which reception from the parent node and reception from the child node or the terminal are simultaneously performed; and a control section that controls the simultaneous transmission and/or the simultaneous reception in accordance with configuration made by the parent node in response to the information.

A radio communication method according to an aspect of the present disclosure includes: reporting, to a parent node by a radio node, information indicating a simultaneous transmission in which transmission to the parent node and transmission to a child node or a terminal are simultaneously performed and/or a simultaneous reception in which reception from the parent node and reception from the child node or the terminal are simultaneously performed; and controlling, by the radio node, the simultaneous transmission and/or the simultaneous reception in accordance with configuration made by the parent node in response to the information.

### Brief Description of Drawings

FIG. 1 illustrates an exemplary configuration of a radio communication system according to an embodiment;
FIG. 2 illustrates exemplary configurations of IAB nodes;
FIG. 3 illustrates exemplary simultaneous transmission and/or simultaneous reception by an IAB-MT and an IAB-DU, for a time resource;
FIG. 4 illustrates an example of reporting, by an IAB node to a parent node, a Duplexing mode and information on the Duplexing mode, according to the embodiment;
FIG. 5 illustrates an example of reporting, by the IAB node to the parent node, information associated with the Duplexing mode, according to the embodiment;
FIG. 6 illustrates an example of configuring, by the parent node for the IAB node, a Duplexing mode and information on the Duplexing mode, according to the embodiment;
FIG. 7 illustrates an exemplary functional configuration of an IAB node or a terminal according to the embodiment; and
FIG. 8 illustrates an exemplary hardware configuration of the IAB node or the terminal according to the embodiment.

### Description of Embodiments

Hereinafter, an embodiment of the present disclosure will be described with reference to the drawings. Note that the embodiment to be described below is merely an example, and an embodiment to which the present disclosure is applied is not limited to the following embodiment.

Further, in the following embodiment of the present disclosure, terms used in 5G New Radio (NR) are used, such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH). This is for convenience of description, and the same signals, functions, and the like may be called by other names.

Further, in the embodiment of the present disclosure, a duplex system may be a Time Division Duplex (TDD) system, a Frequency Division Duplex (FDD) system, or another system (e.g., Flexible Duplex or the like).

Further, in the embodiment of the present disclosure, the phrase "a radio parameter or the like is "configured,"" may refer to pre-configuration of a predetermined value or configuration of a radio parameter that is indicated from a base station or a terminal.

### (Embodiment)

### <System Configuration>

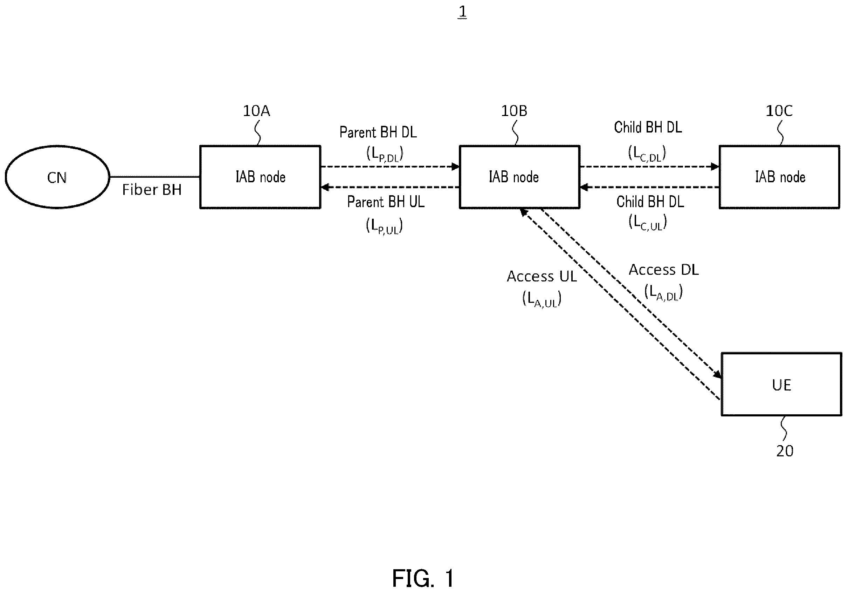

FIG. 1 illustrates an exemplary configuration of radio communication system 1 according to an embodiment. Radio communication system 1 includes a plurality of IAB nodes 10A to 10C as one example of radio nodes, and terminal 20. Hereinafter, to describe IAB nodes 10A to 10C without distinguishing them from one another, only the numeral common to the reference signs may be used as in "IAB node 10."

IAB nodes 10A to 10C are connected to one another by radio communication. In FIG. 1, IAB node 10B is connected to IAB node 10A. IAB node 10C is connected to IAB node 10B. In the following, IAB node 10A, which is positioned upstream (i.e., in UL direction) as viewed from IAB node 10B, may be called parent IAB node 10A or parent node 10A, whereas IAB node 10C, which is positioned downstream (i.e., in DL direction) as viewed from IAB node 10B, may be called child IAB node 10C or child node 10C. That is, IAB node 10A is a parent node of IAB node 10B, and IAB node 10B is a child node of IAB node 10A. Note that the parent node may be called a higher (upper) node, and the child node may be may be called a lower node. Further, the parent node may be may be called an IAB donor.

Each of IAB nodes 10A to 10C forms a cell, which is an area in which the IAB node is available to perform radio communication. That is, each of IAB nodes 10 has a function as a base station. Terminal 20 in a cell can be connected by radio to IAB node 10 forming the cell. Note that each of IAB nodes 10 having a function as a base station may be referred to as a gNodeB (gNB). Further, each of IAB nodes 10 may be regarded as an apparatus included in a network to which terminal 20 is connected.

Terminal 20 is a communication apparatus provided with a radio communication function, such as a smart phone, a mobile phone, a tablet, a wearable terminal, a Machine-to-Machine (M2M) communication module. Terminal 20 may be referred to as a UE.

IAB node 10A may be connected to a Core Network (CN) through a fiber Backhaul (BH). The connection to the CN is not limited only to that through an optical fiber, but may be any means capable of transmitting and receiving data. Note also that the transmission/reception means between IAB node 10A and the core network or the like may be a means using high-capacity radio.

Incidentally, the number of IAB nodes 10 and the number of terminals 20 included in radio communication system 1 are not limited to the example of FIG. 1. For example, the number of parent IAB nodes 10A connected to IAB node 10B may be two or more. Further, another child IAB node which is not illustrated in FIG. 1 may be connected to IAB node 10B. Furthermore, the number of terminals 20 connected to IAB node 10B may be two or more.

### <IAB Node>

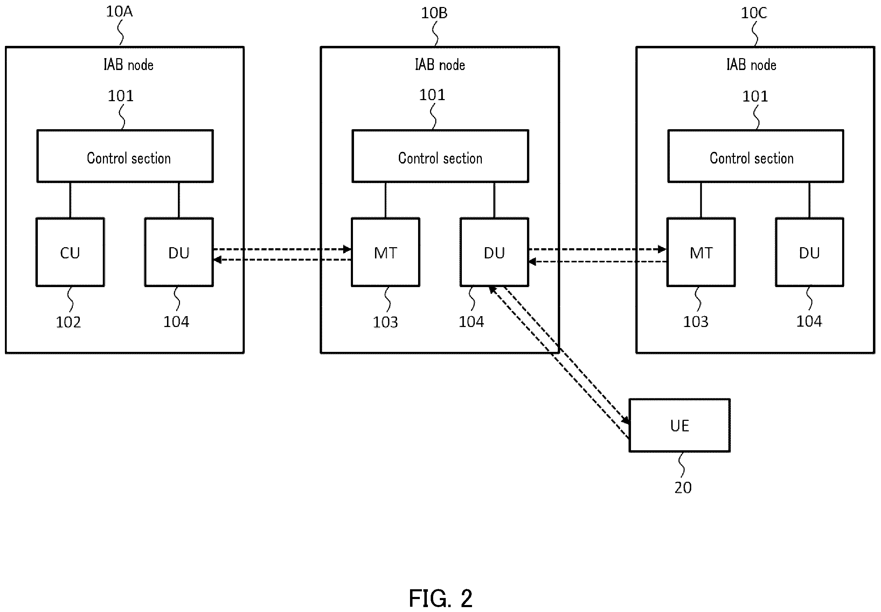

FIG. 2 illustrates exemplary configurations of IAB nodes 10 according to an embodiment.

As illustrated in FIG. 2, IAB node 10A includes control section 101, Control Unit (CU) 102, and DU 104. Each of IAB nodes 10B and 10C includes control section 101, MT 103, and DU 104. CU 102, MT 103, and DU 104 may be functional blocks. Hereinafter, a function of CU 102 may be expressed as "CU" without the reference sign. Further, a function of MT 103 may be expressed as "MT" without the reference sign. Furthermore, a function of DU 104 may be expressed as "DU" without the reference sign. Besies, DU 104 may have a function corresponding to that of the base station or an extension station. One example of MT 103 may have a function corresponding to that of the terminal.

IAB node 10B is connected to an upstream IAB node (in FIG. 2, IAB node 10A) by MT 103. That is, MT 103 of IAB node 10B handles connection to parent IAB node 10A.

IAB node 10B is connected to UE 20 and an MT of downstream IAB node 10C by DU 104. That is, DU 104 of IAB node 10B handles connection to UE 20 and child IAB node 10C. The connection to UE 20 and/or child IAB node 10C by DU 104 is, for example, establishment of a Radio Resource Control (RRC) channel.

Control section 101 controls MT 103 (CU 102 for IAB node 10A) and DU 104. To be more specific, control section 101 controls a simultaneous operation of MT 103 and DU 104 (in particular, simultaneous transmission and/or simultaneous reception), based on configuration/indication received from the parent node. Operation of IAB node 10 described below may be implemented by control section 101 controlling MT 103 (CU 102 for IAB node 10A) and DU 104. Control section 101 may also be provided with a storage section for storing therein a variety of information.

MT 103 performs communication with the parent node in a backhaul link to the parent node (hereinafter referred to as "parent link"). DU 104 performs communication with a child node and/or a terminal in a backhaul link to the child node and/or in an access link with the terminal. Hereinafter, the backhaul link to the child node and/or the access link to the terminal are referred to as a "child link."

A half-duplex constraint may be applied between the parent link and each of the child links. In Release 16 of 3GPP, in order to realize the half-duplex constraint, time division multiplexing (TDM) may be applied to the parent link and the child link. In this case, either the parent link or the child link may be available to utilize a time resource. Application of SDM and FDM has been studied in Release 17 and a later release.

The time resource for the parent link (hereinafter referred to as "MT resources") are configured with one of the following types:
- An MT resource configured with a DL type (hereinafter referred to as "MT-D" or simply "D") is used as L_{P,DL} illustrated in FIG. 1;
- An MT resource configured with a UL type (hereinafter referred to as "MT-U" or simply "U") is used as L_{P,UL} illustrated in FIG. 1; and
- An MT resource configured with a Flexible (FL) type (hereinafter referred to as "MT-F" or simply "F") is used as L_{P,DL} or L_{P,UL} illustrated in FIG. 1.

The MT resource may be replaced by another expression such as resources used for communication with parent IAB node 10A, resources used for communication with parent IAB node 10A over the backhaul link, or resources used for communication with a serving cell.

The time resources for the child link (hereinafter referred to as "DU resources") are configured with one of the following types:
- A DU resource configured with the DL type (hereinafter referred to as "DU-D" or simply "D") may be used as L_{C,DL} or L_{A,DL} illustrated in FIG. 1;
- A DU resource configured with the UL type (hereinafter referred to as "DU-U" or simply "U") may be used as L_{C,UL} or L_{A,UL} illustrated in FIG. 1; and
- A DU resource configured with the FL type (hereinafter referred to as "DU-F" or simply "F") may be used as L_{C,DL}, L_{C,UL}, L_{A,DL}, or L_{A,UL} illustrated in FIG. 1.

The DU resource may be replaced by another expression such as resources used for communication with child IAB node 10C and/or UE 20, or resources used for communication with child IAB node 10C over the backhaul link and/or with UE 20 over the access link.

Further, DU-D, DU-U, and DU-F are configured with any of the following types:
- A DU resource configured with a Hard type (hereinafter may be referred to as "H") is used for the child link but not for the parent link. Hereafter, the DU resource configured with the Hard type may be referred to as "DU(H)";
- Explicit and/or implicit indication from parent IAB node 10A determines whether a DU resource configured with a Soft type (hereinafter may be referred to as "S") is available for the child link (hereinafter referred to as "Availability"). Hereafter, the DU resource configured with the Soft type may be referred to as "DU(S)"; and
- A DU resource configured with a Not-Available (NA) type (hereinafter may be referred to as "NA") is not used for the child link. Hereafter, the DU resource configured with the NA type may be referred to as "DU(NA)."

Note that, availability (available or not available) is specified within the DU(S).

Note that the configuration of D, U, and F, and the configuration of H, S, and NA for the DU resources may be semi-statically performed. For example, these configurations for the DU may be configured by an RRC parameter. Note that the RRC parameter may be replaced with another term such as RRC signaling, an RRC message, or RRC configuration. Besides, these configurations for the DU may also be configured by an F1-AP parameter. Note that the F1-AP parameter may be replaced with another term such as F1-AP signaling or an F1-AP message.

The type/availability of frequency resource for the parent link and the child link may be configured/indicated in the same manner as in the time resource.

Incidentally, the configuration examples of IABs illustrated in FIG. 2 are not necessarily limited to such configurations. For example, for the radio backhaul, an IAB may be configured by tunneling using GPRS Tunneling Protocol (GTP)-U / User Datagram Protocol (UDP) / Internet Protocol (IP).

A major advantage of such an IAB includes flexible and dense arrangement of NR cells without increasing density of a transport network. The IAB is applicable to a variety of scenarios, such as outdoor arranging small cells, indoors, and even supporting mobile relays (e.g., in buses and trains).

The IAB may also support stand alone (SA) deployment with only NR or non-stand alone (NSA) deployment with other RATs (such as LTE), as illustrated in FIGS. 1 and 2.

In the present embodiment, the radio access and the radio backhaul can be operated as Half-duplex or Full-duplex. Further, in the present embodiment, as a multiplexing scheme, the time division multiplexing (TDM), the frequency division multiplexing (FDM), and the space division multiplexing (SDM) are available. That is, in the present embodiment, the simultaneous operation of the IAB-DU and the IAB-MT is realized using FDM or SDM.

In addition to the above-described IAB, IAB node 10 and terminal 20 are capable of supporting, by controlling radio signals transmitted from the plurality of antenna elements, a Massive Multi Input Multi Output (MIMO) for generating an antenna beam with higher directivity, carrier aggregation (CA) using a plurality of component carriers (CCs) by bundling, dual connectivity (DC) for performing communication simultaneously between terminal 20 and each of the plurality of NG-RAN nodes, and the like.

Besides, channels used in the radio communication include a control channel and a data channel. The control channel includes a Physical Downlink Control Channel (PDCCH), a Physical Uplink Control Channel (PUCCH), a Physical Random Access Channel (PRACH), a Downlink Control Information (DCI) including a Random Access Radio Network Temporary Identifier (RA-RNTI), and a Physical Broadcast Channel (PBCH). Note that a reference signal included in the control channel may include, for example, a Channel State Information-Reference Signal (CSI-RS), a Sounding Reference Signal (SRS), and a Positioning Reference Signal (PRS) for position information. Meanwhile, the data channel includes a Physical Downlink Shared Channel (PDSCH), a Physical Uplink Shared Channel (PUSCH), and the like. The term "data" may refere to data transmitted via the data channel.

Control section 101 controls indication (beam indication) of information on antenna beam BM used by an IAB node (IAB-MT and IAB-DU). In NR, for reception of PDSCH or PDCCH (DMRS therefor), a Transmission Configuration Indication (TCI) state is configured (or when TCI is not configured, it may be quasi co-location (QCL) related with an SSB index at the most recent PRACH transmission).

The QCL relation may include both the case of being explicitly configured by the TCI state and the case where the TCI state is not configured. The QCL, the TCI state, and the beam (antenna beam) may be replaced with one another.

The beam indication may include information on any of the QCL, the TCI state, and the beam. That is, the beam indication may be an index (SSB index) for identifying an SSB (SS/PBCH Block) that is a synchronization signal block or broadcast channel block, which is composed of Synchronization Signals (SSs) and Physical Broadcast Channels (PBCHs).

### <Study>

As mentioned above, it has been studied to extend resource multiplexing between a child link and a parent link of IAB node 10B, including a simultaneous operation of the child link (L_{C,DL} and L_{C,UL} or L_{A,DL} and L_{A,UL}) and the parent link (L_{P,UL} and L_{P,DL}) of IAB node 10B.

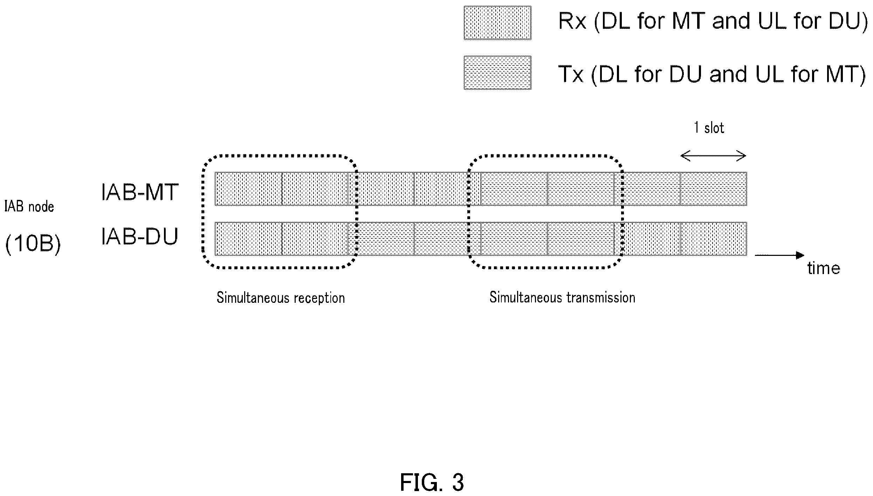

As an example, FIG. 3 illustraes exemplary simultaneous transmission and simultaneous reception by IAB-MT 103 and IAB-DU 104, for a time resource.

The first and second slots illustrated in FIG. 3 are for the simultaneous reception where both IAB-MT 103 and IAB-DU 104 perform reception, and the fifth and sixth slots illustrated in FIG. 3 are for the simultaneous transmission where both IAB-MT 103 and IAB-DU 104 perform transmission.

With respect to the multiplexing relating to the simultaneous operation, in NPLs 2 and 3, for example, it has been agreed to perform, between an IAB node and a parent node, a report or configuration (indication) of information on the multiplexing, but the details thereof have not been determined.

Further, in addition to the report or configuration of the information on the multiplexing described above, it is conceivable that additional associated information such as a timing mode (Case #6 and Case #7) is required, but the details thereof have not been determined.

Thus, although the multiplexing relating to the simultaneous operation as illustrated in FIG. 3 is possible as an example, the report or configuration of the information on such multiplexing is not determined in detail.

Hereinafter, proposed techniques which enable an appropriate report or configuration of the information on the multiplexing relating to the simultaneous operation (in particular, simultaneous transmission and/or simultaneous reception) will be described.

### (Proposed Technique 1)

In Proposed Technique 1, IAB node 10B (IAB-MT 103) may report a desired Duplexing mode (multiplexing mode) and information on the Duplexing mode to parent node 10A or DU 104 of parent node 10A (alternatively, parent node 10A or (when higher node is present on parent node 10A) CU of higher node), as described below. For example, IAB node 10B may report the information dynamically or semi-statically. Note that, in the following, the expression "IAB node 10B reports some information to parent node 10A" and an expression similar to this may refer to the expression "IAB node 10B reports some information to parent node 10A or DU 104 of parent node 10A (alternatively, parent node 10A or (when higher node is present on parent node 10A) CU of higher node)" and an expression similar to this. Likewise, in the following, the expression "parent node 10A configures IAB node 10B with some information" and an expression similar to this may refer to the expression "parent node 10A or DU 104 of parent node 10A (alternatively, parent node 10A or (when higher node is present on parent node 10A) CU of higher node) configures IAB node 10B with some information" and an expression similar to this. Besides, the duplexing mode may also be referred to as a Multiplexing mode or an operation mode.

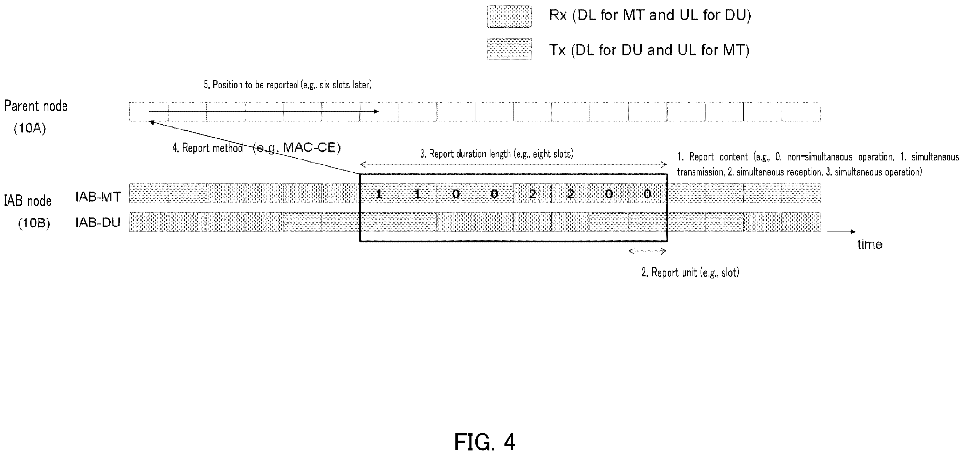

FIG. 4 illustrates an example of reporting, by IAB node 10B to parent node 10A, a Duplexing mode and information on the Duplexing mode, according to an embodiment.

### [1-1. Report Content]

IAB node 10B may report, as a report content of the Duplexing mode, a combination of: at least one of the following performed by IAB-MT 103 and IAB-DU 104 of IAB node 10B for a time resource, a non-simultaneous operation (IAB-MT 103 and IAB-DU 104 perform time division multiplexing), a simultaneous transmission, a simultaneous reception, and a simultaneous operation that is neither the simultaneous transmission nor the simultaneous reception; and FDM, SDM, TDM, or no designation (i.e., multiplexing scheme). That is, IAB node 10B may report a combination of the non-simultaneous operation, the simultaneous transmission, the simultaneous reception, or the simultaneous operation for the time resource and FDM, SDM, TDM or no designation, thereby requesting a Duplexing mode indicated by the combination. Here, the Duplexing mode may refer to a combination of the non-simultaneous operation, the simultaneous transmission, the simultaneous reception, or the simultaneous operation that is neither the simultaneous transmission nor the simultaneous reception, and FDM, SDM, TDM, or no designation. For example, as illustrated in FIG. 4, IAB node 10B designates 0 in the case of the non-simultaneous operation, designates 1 in the case of the simultaneous transmission, designates 2 in the case of the simultaneous reception, and designates 3 (in FIG. 4, abbrevied as simultaneous operation) in the case of the simultaneous operation that is neither the simultaneous transmission nor the simultaneous reception (case where IAB-DU 104 performs reception from child node 10C or UE 20 and IAB-MT 103 performs transmission to parent node 10A, or case where IAB-DU 104 performs transmission to child node 10C or UE 20 and IAB-MT 103 performs reception from parent node 10A). Similarly, although not illustrated, for example, IAB node 10B may designate 0 in the case of FDM, designate 1 in the case of SDM, designate 2 in the case of TDM, and designate 3 in the case of no designation (i.e., any of FDM, SDM, and TDM is possible). IAB node 10B may report the report content using the combination of these values. Alternatively, a value that identifies each combination may be given, and IAB node 10B may then report the value identifying the combination indicating the report content. Note that these values are merely examplary, and other values may be used. Further, it is possible to separately provide the simultaneous operation in which IAB-DU 104 performs reception from child-node 10C or UE 20 and IAB-MT 103 performs transmission to parent node 10A and the operation in which IAB-DU 104 performs transmission to child-node 10C or UE 20 and IAB-MT 103 performs reception from parent node 10A, and a value that identifies each of these may be given. Alternatively or additionally, it is possible to provide a first single operation in which IAB-DU 104 performs reception from child-node 10C or UE 20 and IAB-MT 103 performs no operation, a second single operation in which IAB-DU 104 performs transmission to child-node 10C or UE 20 and IAB-MT 103 performs no operation, a third single operation in which IAB-DU 104 performs no operation and IAB-MT 103 performs reception from parent node 10A, a fourth single operation in which IAB-DU 104 performs no operation and IAB-MT 103 performs transmission to parent node 10A (first to fourth single operations may also be collectively regarded as single operation), and a non-execution in which neither IAB-DU 104 nor IAB-MT 103 performs the operation, and a value that identifies each of these may be given. Thus, the Duplexing mode may be realized as a combination of these extended values, without limitation to the above combination example. Incidentally, at least one of 1-A to 1-E described below may be reported in association with the report content.

### [1-2. Report Unit]

IAB node 10B may report any of one symbol/slot, a plurality of one symbols/slots, and a resource type (DL/UL/F or H/S/NA), as a report unit. That is, IAB node 10B may report units in which the same 1-1 (report content) described above, i.e., the Duplexing mode is requested, thereby requesting units of time periods in which the same Duplexing mode is requested. FIG. 4 illustrates an example in which the report unit is one slot. In this case, the Duplexing mode is specified per one slot.

### [1-3. Report Duration Length]

IAB node 10B may report any length as a length of a report duration. That is, IAB node 10B may report the duration in which the above 1-1 (report content), i.e., the Duplexing mode is requested, thereby requesting the duration in which the Duplexing mode is to be requested. FIG. 4 illustrates an example in which the report duration length is eight slots. Note that the report duration length may be defined by specifications or may be configured by a network (e.g., higher node), in addition to being reported by IAB node 10B.

### [1-4. Report Method]

The above 1-1 to 1-3 reported by IAB node 10B may be reported dynamically or semi-statically as described above, and may be reported using, e.g., RRC, Uplink Control Information (UCI), and/or a Medium Access Control-Control Element (MAC-CE).

### [1-5. Position to be Reported]

IAB node 10B may optionally also report, as a position to be reported, a spacing from the position (e.g., slot) where parent node 10A has received the report. That is, IAB node 10B may request a position where the duration in which the above 1-1 (report content), i.e., the Duplexing mode is requested starts, thereby reporting a starting position of a duration in which the Duplexing mode is to be requested. FIG. 4, illustrates an example in which the position to be reported is six slots later from the position where parent node 10A has received the report. Note that the position to be reported may be defined by specifications or may be configured by a network (e.g., higher node), in addition to being reported by IAB node 10B.

### [1-6. Report Timing]

With respect to a report timing, the report may be made as needed, periodically, or semi-periodically. When the report is made periodically, a period may be the length of the report duration described above (in example of FIG. 4, portion enclosed by black line box), any length, defined by specifications, or may be configured by a network (e.g., higher node). Alternatively, the above 1-1 to 1-3 (and 1-5) reported by IAB node 10B may be interpreted by parent node 10A as being repeated until the next report is made by IAB node 10B. In this case, IAB node 10B can reduce the number of times of report, thus reducing a signalling amount associated with the report.

In relation to an operating mode, IAB node 10B (IAB-MT 103) may report the following information to parent node 10A. For example, IAB node 10B may report the following information for each report unit mentioned above (i.e., above 1-2) or for each Duplexing mode (operation mode, i.e., combination in above 1-1). In addition, a content of the following information to be reported may vary depending on the operation mode.

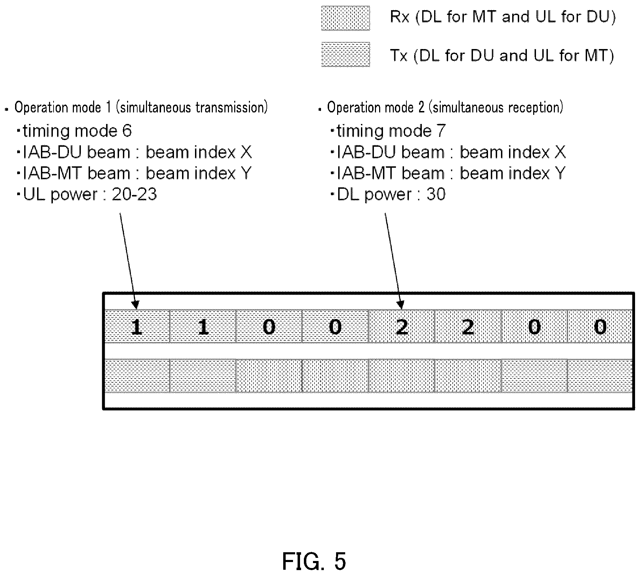

FIG. 5 illustrates an example of reporting, by IAB node 10B to parent node 10A, information associated with a Duplexing mode, according to the embodiment.

### [1-A. Timing Mode]

IAB node 10B may report any of Timing Mode 1 (Case #1), Timing Mode 6 (Case #6), and Timing Mode 7 (Case #7), as a timing mode. Here, IAB node 10B may report Timing Mode 6 only when the operation mode is the simultaneous transmission, or may report Timing Mode 7 only when the operation mode is the simultaneous reception. For example, as illustrated in FIG. 5, Timing Mode 6 is reported for the first slot in which the simultaneous transmission (value 1) is reported, whereas Timing Mode 7 is reported for the fifth slot in which the simultaneous reception (value 2) is reported. Note that, when Timing Mode 6 is reported, the simultaneous transmission may be implicitly reported, and when Timing Mode 7 is reported, the simultaneous reception may be implicitly reported. Alternatively, when the simultaneous transmission (value 1) is reported, Timing Mode 6 may be implicitly reported, or when the simultaneous reception (value 2) is reported, Timing Mode 7 may be implicitly reported. In consequence, IAB node 10B can reduce the signaling amount.

### [1-B. IAB-MT Beam Information]

IAB node 10B may report a beam index (ID) of a beam used by IAB-MT 103, as information on the beam of IAB-MT 103 of IAB node 10B. For example, as illustrated in FIG. 5, Beam Index Y is reported for the first slot in which the simultaneous transmission (value 1) is reported, as the beam used by IAB-MT 103, and Beam Index Y is reported also for the fifth slot in which the simultaneous reception (value 2) is reported, as the beam used by IAB-MT 103. Note that IAB node 10B may report, in place of or in addition to the beam ID of the beam used by IAB-MT 103, a beam ID(s) of a beam that IAB-MT 103 wishes to use and/or a beam that IAB-MT 103 should not use.

### [1-C. IAB-DU Beam information]

IAB node 10B may report a beam ID of a beam used by IAB-DU 104, as information on the beam of IAB-DU 104 of IAB node 10B. For example, as illustrated in FIG. 5, Beam Index X is reported for the first slot in which the simultaneous transmission (value 1) is reported, as the beam used by IAB-DU 104, and Beam Index X is reported also for the fifth slot in which the simultaneous reception (value 2) is reported, as the beam used by IAB-DU 104. Note that IAB node 10B may report, in place of or in addition to the beam ID of the beam used by IAB-DU 104, a beam ID(s) of a beam that IAB-DU 104 wishes to use and/or a beam that IAB-DU 104 should not use.

### [1-D. DL Power Control Information]

IAB node 10B may report DL transmission power that is expected for DL transmission from parent node 10A. For example, a configurable range may be defined by specifications or may be configured by RRC, a DCI and/or a MAC-CE. IAB node 10B may report the expected DL transmission power, within the configurable range. For example, as illustrated in FIG. 5, DL power 30 is reported for the fifth slot in which the simultaneous reception (valued 2) is reported, as the expected DL transmission power.

### [1-E. UL Power Control Information]

IAB node 10B may report a range of a Power Spectrum Density (PSD) of UL transmission power that is expected for UL transmission to parent node 10A. For example, when a configurable range is 15 to 23, IAB node 10B may report the upper and lower limits of the PSD within this range. For example, as illustrated in FIG. 5, UL power 23 and 20 are reported, as the upper and lower limits of the PSD, respectively, for the first slot in which the simultaneous transmission (valued 1) is reported.

In addition to the above 1-A to 1-E, IAB node 10B may report, to parent node 10A, other information such as the number of guard symbols for Duplexing mode switching, information on Cross Link Interference (CLI), and the like, for an adaptive configuration and control.

At least one of the above 1-A to 1-E and other information reported by IAB node 10B may be reported dynamically or semi-statically as described above, and may be reported using, e.g., RRC, a UCI, and/or a MAC-CE.

### (Proposed Technique 2)

In Proposed Technique 2, in response to Proposed Technique 1, parent node 10A may configure IAB node 10B with a Duplexing mode and information on the Duplexing mode, in response to the report (request) by IAB node 10B of a desired Duplexing mode and information on the Duplexing mode. The Duplexing mode and the information on the Duplexing mode may be configured dynamically or semi-statically.

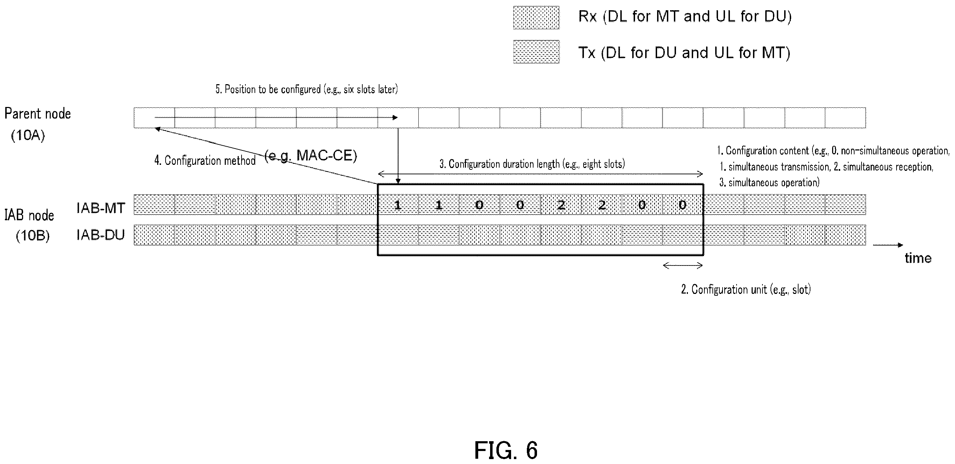

FIG. 6 illustrates an example of configuring, by parent node 10A for IAB node 10B, a Duplexing mode and information on the Duplexing mode, according to the embodiment.

### [2-1. Configuration Content]

Parent node 10A may configure, as a configurattion content of the Duplexing mode, a combination of: at least one of the following performed by IAB-MT 103 and IAB-DU 104 of IAB node 10B for a time resource, a non-simultaneous operation, a simultaneous transmission, a simultaneous reception, and a simultaneous operation that is neither the simultaneous transmission nor the simultaneous reception; and FDM, SDM, TDM, or no designation. For example, as illustrated in FIG. 6, parent node 10A designates 0 in the case of the non-simultaneous operation, designates 1 in the case of the simultaneous transmission, designates 2 in the case of the simultaneous reception, and designates 3 (in FIG. 6, abbrevied as simultaneous operation) in the case of the simultaneous operation that is neither the simultaneous transmission nor the simultaneous reception, in response to FIG. 4. Similarly, although not illustrated, for example, parent node 10A may designate 0 in the case of FDM, designate 1 in the case of SDM, designate 2 in the case of TDM, and designate 3 in the case of no designation. Parent node 10A may indicate the configuration content using the combination of these values. Alternatively, a value that identifies each combination may be given, and parent node 10A may then report the value identifying the combination indicating the configuration content. Note that these values are merely examplary, and other values may be used. Further, the Duplexing mode may be extended in the same manner as described in the above 1-1. Incidentally, at least one of 2-A to 2-D described below may be reported in association with the configuration content.

### [2-2. Configuration Unit]

Parent node 10A may configure any of one symbol/slot, a plurality of one symbols/slots, and a resource type (DL/UL/F or H/S/NA), as a configuration unit. FIG. 6 illustrates an example in which the configuration unit is one slot, in response to FIG. 4.

### [2-3. Configuration Duration Length]

Parent node 10A may configure any length as a length of a configuration duration. FIG. 6 illustrates an example in which the length of the configuration duration is eight slots, in response to FIG. 4. Note that the length of the configuration duration may be defined by specifications or may be configured by a network (e.g., higher node), in addition to being configured by parent node 10A.

### [2-4. Configuration Method]

The above 2-1 to 2-3 configured by parent node 10A may be configured dynamically or semi-statically as described above, and may be configured using, e.g., RRC, Downlink Control Information (DCI), and/or a MAC-CE.

### [2-5. Position to be Configured]

Parent node 10A may optionally configure, as a position to be configured, a spacing from the configured position (e.g., slot). FIG. 6 illustrates an example in which the position to be configured is six slots later the configured position, in response to FIG. 4. Note that the position to be configured may be defined by specifications or may be configured by a network (e.g., higher node), in addition to being configured by parent node 10A.

### [2-6. Configuration Timing]

With respect to a configuration timing, the configuration may be made as needed, periodically, or semi-periodically. When the configuration is made periodically, a period may be the length of the configuration duration described above (in example of FIG. 6, portion enclosed by black line box), any length, defined by specifications, or may be configured by a network (e.g., higher node). Alternatively, the above 2-1 to 2-3 (and 2-5) configured by parent node 10A may be interpreted by IAB node 10B as being repeated until the next configuration is made by parent node 10A. In this case, parent node 10A can reduce the number of times of configuration, thus reducing a signalling amount associated with the configuration.

Note that the above 1-1 to 1-3 (and 1-5) reported by IAB node 10B and the above 2-1 to 2-3 (and 2-5) configured by parent node 10A may be the same (parent node 10A may permit report (request) from IAB node 10B) as illustrated in FIGS. 4 and 6, or may be different from each other (parent node 10A does not permit report (request) from IAB node 10B). For example, in a case where IAB node 10B reports (requests), to parent node 10A, a simultaneous transmission for a certain time resource and the time resource is already configured for another IAB node or UE (terminal), parent node 10A need not permit IAB node 10B the simultaneous transmission. For example, parent node 10A may configure IAB node 10B with a non-simultaneous operation or the like for the time resource.

In relation to an operating mode, parent node 10A may configure the following information for IAB node 10B. For example, parent node 10A may configure the following information for each configuration unit mentioned above (i.e., above 2-2) or for each Duplexing mode (operation mode, i.e., combination in above 2-1). In addition, a content of the following information to be configured may vary depending on the operation mode.

### [2-A. Timing Mode]

Parent node 10A may configure any of Timing Mode 1 (Case #1), Timing Mode 6 (Case #6), and Timing Mode 7 (Case #7), as a timing mode. Here, parent node 10A may configure Timing Mode 6 only when the operation mode is the simultaneous transmission, or may configure Timing Mode 7 only when the operation mode is the simultaneous reception. Note that, when Timing Mode 6 is configured, the simultaneous transmission may be implicitly configured, and when Timing Mode 7 is configured, the simultaneous reception may be implicitly configured. Alternatively, when the simultaneous transmission (value 1) is configured, Timing Mode 6 may be implicitly configured, or when the simultaneous reception (value 2) is configured, Timing Mode 7 may be implicitly configured. In consequence, parent node 10A can reduce the signaling amount.

### [2-B. IAB-MT Beam Information]

Parent node 10A may configure a beam ID of a beam used by IAB-MT 103, a beam that IAB-MT 103 is advised to use, and/or a beam that IAB-MT 103 should not use, as information on the beam of IAB-MT 103 of IAB node 10B.

### [2-C. IAB-DU Beam information]

Parent node 10A may configure a beam ID of a beam used by IAB-DU 104, a beam that IAB-DU 104 is advised to use, and/or a beam that IAB-DU 104 should not use, as information on the beam of IAB-DU 104 of IAB node 10B.

### [2-D. DL Power Control Information]

Parent node 10A may report DL transmission power to be configured for the DL transmission.

Meanwhile, as for UL power control, parent node 10A may take into account the reported UL power control information in 1-E described above and then configure a value relating to the UL power control of IAB node 10B as in the existing UL power control technology.

Further, as with the Duplexing mode and the information on the Duplexing mode, the above 2-A to 2-D reported by IAB node 10B and the above 2-A to 2-D configured by parent node 10A may be the same (parent node 10A may permit report (request) from IAB node 10B), or may be different from each other (parent node 10A does not permit report (request) from IAB node 10B).

In addition to the above 2-A to 2-D, parent node 10A may configure IAB node 10B with other information such as the number of guard symbols for Duplexing mode switching, information on Cross Link Interference (CLI), and the like, for an adaptive configuration and control.

At least one of the above 2-A to 2-D and other information confifgured by parent node 10A may be reported dynamically or semi-statically as described above, and may be configured using, e.g., RRC, a DCI, and/or a MAC-CE.

### [Variation]

In the above, an example has been described in which parent node 10A performs configuration for IAB node 10B in response to a report (request) from IAB node 10B, but the present disclosure is not limited to this example.

For example, in the case of Timing Mode 7 (Case #7), the parent node performs the simultaneous reception between IAB-MT 103 and IAB-DU 104. In this case, it may be desirable for the parent node to autonomously determine a reception timing of information from an IAB node (child node). Therefore, in such a case, the parent node may autonomously configure (indicate), for (to) the IAB node, the above 2-1 to 2-3 (and 2-5), 2-A to 2-D, and the like, without receiving the report (request) from the IAB node.

### [Brief Summary]

IAB node 10B can control and perform the simultaneous operation (in particular, simultaneous transmission and/or simultaneous reception) in accordance with the above configuration (indication) made by parent node 10A.

### (Proposed Technique 3)

In Proposed Technique 3, in relation to Proposed Technique(s) 2 and/or 3, IAB node 10B (IAB-MT 103) may report capability information on IAB node 10B (IAB-MT 103) (IAB capability) as follows to parent node 10A. The IAB capability may be indicated by, for example, higher layer signaling such as RRC.

In one example, IAB node 10B may report the capability(ies) as to whether support of a report and/or configuration of a Duplexing mode and the information on the Duplexing mode is possible.

In another example, IAB node 10B may report the capability(ies) as to whether support of a report and/or configuration of a timing mode is possible.

In still another example, IAB node 10B may report the capability(ies) as to whether support of a report and/or configuration of IAB-MT/IAB-DU beam information is possible.

In still another example, IAB node 10B may report the capability(ies) as to whether support of a report and/or configuration of DL power control information is possible. In yet another example, IAB node 10B may report the capability(ies) as to whether support of a report and/or configuration of UL power control information is possible.

In addition, IAB node 10B may report, to parent node 10A, the above capability(ies) on all frequency bands at once supported by IAB node 10B, may report for each of the frequency bands supported by IAB node 10B, or may report in each of Frequency Range (FR) 1 and FR 2.

Moreover, IAB node 10B may report, to parent node 10A, the above capability(ies) for duplex schemes supported by IAB node 10B or for each duplex scheme (TDD/FDD) supported by an IAB node.

This allows parent node 10A to recognize various IAB functions that can be supported by IAB node 10B.

Proposed Technique(s) 1 and/or 2 described above may be applied to a case where a capability of IAB node 10B is supported and/or enabled by higher layer signaling.

### (Apparatus Configuration)

Next, descriptions will be given of exemplary functional configurations of IAB node 10 and terminal 20, which perform the processing and operations described thus far. IAB node 10 and terminal 20 include the functions described in the above examples. However, IAB node 10 and terminal 20 may include only some of the functions described in the above examples.

### < IAB Node 10 and Terminal 20>

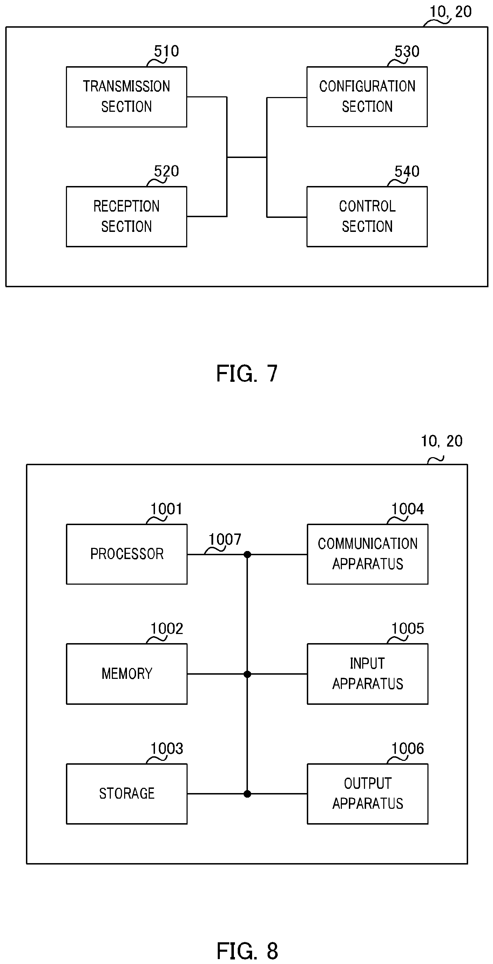

FIG. 7 illustrates an exemplary functional configuration of IAB node 10 or terminal 20 according to an embodiment of the present disclosure. As illustrated in FIG. 7, IAB node 10 and terminal 20 each include transmission section 510, reception section 520, configuration section 530, and control section 540. The functional configuration illustrated in FIG. 7 is merely an example. Any names may be used for the function categories and functional sections as long as they are capable of performing an operation according to an embodiment of the present disclosure.

Transmission section 510 generates a transmission signal from transmission data, and transmits the generated transmission signal by radio. Reception section 520 receives various types of signals by radio, and acquires a higher layer signal from the received physical layer signal. With respect to IAB node 10, transmission section 510 and reception section 520 are illustrated in one block, but transmission section 510 and reception section 520 may be included in each of an IAB-MT (IAB-CU) and an IAB-DU. Transmission section 510 and reception section 520 may be referred to as a communication section.

Configuration section 530, for example, stores various types of configuration information received from a parent node by reception section 520 in a storage apparatus (storage section) and then reads the configuration information from the storage apparatus as needed. Configuration section 530 stores, in the storage apparatus, also configured information configured in advance. Note that configuration section 530 may be included in control section 540.

Control section 540 controls the entirety of IAB node 10 and terminal 20. To be more specific, control section 540 controls a simultaneous operation of MT 103 and DU 104 (in particular, simultaneous transmission and/or simultaneous reception) as described in the above examples. The functional section relating to signal transmission in control section 540 may be included in transmission section 510, and the functional section relating to signal reception in control section 540 may be included in reception section 520.

For example, transmitssion section 510 of IAB node 10 may report, to a parent node, information indicating a simultaneous transmission in which transmission to the parent node and transmission to a child node or a terminal are simultaneously performed and/or a simultaneous reception in which reception from the parent node and reception from the child node or the terminal are simultaneously performed. Control section 540 of IAB node 10 may control the simultaneous transmission and/or the simultaneous reception, in accordance with configuration made by the parent node in response to the information indicating the simultaneous transmission and/or the simultaneous reception.

This structure allows IAB node 10 to report (request), to the parent node, the simultaneous transmission and/or the simultaneous reception by IAB-MT 103 and IAB-DU 104 and to adaptively control the simultaneous transmission and/or the simultaneous reception in accordance with the configuration made by the parent node in response to the report. Therefore, a report or configuration of the information on multiplexing relating to the simultaneous transmission and/or the simultaneous reception can be appropriately performed, which enables an adaptive configuration of the Duplexing mode for a time resource.

Transmission section 510 of IAB node 10 may report, to the parent node, information indicating a report unit of the information indicating the simultaneous transmission and/or the simultaneous reception. Control section 540 of IAB node 10 may control the simultaneous transmission and/or the simultaneous reception, further in accordance with a configuration unit of the simultaneous transmission and/or the simultaneous reception from the parent node in response to the information indicating the report unit.

This structure allows the IAB node to report (request), to the parent node, units (e.g., one symbol/slot, a plirality of parent symbols/slots, or resource type) in which the simultaneous transmission and/or the simultaneous reception are/is reported (requested) and to control the simultaneous transmission and/or simultaneous reception more finely and adaptively in accordance with the configuration made by the parent node in response to the report.

Transmission section 510 of IAB node 10 may report, to the parent node, information indicating a duration in which the information indicating the simultaneous transmission and/or the simultaneous reception is reported. Control section 540 of IAB node 10 may control the simultaneous transmission and/or the simultaneous reception that are/is included in a duration configured by the parent node in response to the information indicating the duration.

This structure allows the IAB node to report (request), to the parent node, the duration (e.g., eight slots or the like) in which the simultaneous transmission and/or the simultaneous reception is reported (requested) and to control the simultaneous transmission and/or simultaneous reception more finely and adaptively in accordance with the configuration of the duration made by the parent node in response to the report.

Transmission section 510 of IAB node 10 may report, to the parent node, information indicating a starting position of the duration in which the information is reported. Control section 540 of IAB node 10 may control the simultaneous transmission and/or the simultaneous reception that are/is included in the duration that starts from a starting position configured by the parent node in response to the information indicating the starting position.

This structure allows the IAB node to report (request), to the parent node, a starting position of the duration (e.g., six slots later from position where parent node has received report) in which the simultaneous transmission and/or the simultaneous reception is reported (requested) and to control the simultaneous transmission and/or simultaneous reception more finely and adaptively in accordance with the configuration of the starting position made by the parent node in response to the report.

Control section 540 of IAB node 10 may control the simultaneous transmission and/or the simultaneous reception that are/is included in the duration which is successively repeated.

This structure allows the IAB node to report (request) only once until a change, to the parent node, the duration in which the simultaneous transmission and/or the simultaneous reception is reported (requested) and to control a simultaneous operation more finely and adaptively in the duration which is succesively repeated, thereby reducing the signaling amount for reporting the duration.

### (Hardware Configuration)

Note that, the block diagrams used to describe the embodiment illustrate blocks on the basis of functions. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or by radio), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmitting unit," "transmission section," or "transmitter." The methods for implementing the functions are not limited specifically as described above.

For example, the IAB node, the terminal, and the like according to an embodiment of the present disclosure may function as a computer that executes processing of a wireless communication method of the present disclosure. FIG. 8 illustrates an example of hardware configurations of the IAB node and the terminal according to an embodiment of the present disclosure. IAB node 10 and terminal 20 described above may be each physically constituted as a computer apparatus including processor 1001, memory 1002, storage 1003, communication apparatus 1004, input apparatus 1005, output apparatus 1006, bus 1007, and the like.

Note that, the term "apparatus" in the following description can be replaced with a circuit, a device, a unit, or the like. The hardware configurations of IAB node 10 and of terminal 20 may include one apparatus or a plurality of apparatuses illustrated in the drawings, or may not include part of the apparatuses.

The functions of IAB node 10 and terminal 20 are implemented by predetermined software (program) loaded into hardware such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control section 101, CU 102, a portion of MT 103 and DU 104, and the ike described above may be implemented by processor 1001.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiments is used. For example, a control section of terminal 20 and the like may be implemented by a control program stored in memory 1002 and operated by a control program operating in processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented using one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called as a register, a cache, a main memory (main storage apparatus), or the like. Memory 1002 can save a program (program code), a software module, and the like that can be executed to carry out the radio communication method according to one embodiment of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called as an auxiliary storage apparatus. The storage medium as described above may be, for example, a database, a server, or other appropriate media including at least one of memory 1002 and storage 1003.

Communication apparatus 1004 is hardware (transmission and reception device) for communication between computers through at least one of wired and radio networks and is also called as, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, antennae and the like included in IAB node 10 and terminal 20 may be realized by communication apparatus 1004.

Input apparatus 1005 is an input device (e.g., a keyboard, a mouse, a microphone, a switch, a button, or a sensor) that receives input from the outside. Output apparatus 1006 is an output device (e.g., a display, a speaker, or an LED lamp) which makes outputs to the outside. Note that input apparatus 1005 and output apparatus 1006 may be integrated (e.g., a touch panel).

The apparatuses, such as processor 1001, memory 1002, and the like are connected by bus 1007 for communication of information. Bus 1007 may be configured using a single bus or using buses different between each pair of the apparatuses.

Furthermore, IAB node 10 and terminal 20 may include hardware, such as a microprocessor, a digital signal processor (DSP), an ASIC (Application Specific Integrated Circuit), a PLD (Programmable Logic Device), and an FPGA (Field Programmable Gate Array), and the hardware may implement part or all of the functional blocks. For example, processor 1001 may be implemented using at least one of these pieces of hardware.

### (Notification and Signaling of Information)

The notification of information is not limited to the aspects/embodiments described in the present disclosure, and the information may be notified by another method. For example, the notification of information may be carried out by one or a combination of physical layer signaling (e.g., Downlink Control Information (DCI) and Uplink Control Information (UCI)), higher layer signaling (e.g., Radio Resource Control (RRC) signaling, Medium Access Control (MAC) signaling, broadcast information (Master Information Block (MIB), and System Information Block (SIB))), and other signals. The RRC signaling may be called an RRC message and may be, for example, an RRC connection setup message, an RRC connection reconfiguration message, or the like.

### <Applied System>

The aspects/embodiments described in the present disclosure may be applied to at least one of a system using Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended based on the above systems. Additionally or alternatively, a combination of two or more of the systems (e.g., a combination of at least LTE or LTE-A and 5G) may be applied.

### (Processing Procedure and/or the like)

The orders of the processing procedures, the sequences, the flow charts, and the like of the aspects and embodiments described in the present disclosure may be changed as long as there is no contradiction. For example, elements of various steps are presented in exemplary orders in the methods described in the present disclosure, and the methods are not limited to the presented specific orders.

### <Operation of IAB Node>

Specific operations which are described in the present disclosure as being performed by the IAB node may sometimes be performed by a higher node (upper node) depending on the situation. Various operations performed for communication with a terminal in a network constituted by one network node or a plurality of network nodes including an IAB node can be obviously performed by at least one of the IAB node and a network node other than the IAB node (examples include, but not limited to, Mobility Management Entity (MME) or Serving Gateway (S-GW)). Although there is one network node in addition to the IAB node in the case illustrated above, a plurality of other network nodes may be combined (e.g., MME and S-GW)

### (Direction of Input and Output)

The information or the like (*see the item of "Information and Signals") can be output from a higher layer (or a lower layer) to a lower layer (or a higher layer). The information, the signals, and the like may be input and output through a plurality of network nodes.

### (Handling of Input and Output Information and the like)

The input and output information and the like may be saved in a specific place (e.g., memory) or may be managed using a management table. The input and output information and the like can be overwritten, updated, or additionally written. The output information and the like may be deleted. The input information and the like may be transmitted to another apparatus.

### (Determination Method)

The determination may be made based on a value expressed by one bit (0 or 1), based on a Boolean value (true or false), or based on comparison with a numerical value (e.g., comparison with a predetermined value).

### (Software)

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a radio technique (e.g., an infrared ray and a microwave), the at least one of the wired technique and the radio technique is included in the definition of the transmission medium.

### (Information and Signals)

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

### ("System" and "Network")

The terms "system" and "network" used in the present disclosure can be interchangeably used.

### (Names of Parameters and Channels)

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulas and the like using the parameters may be different from the ones explicitly disclosed in the present disclosure. Various channels (e.g., PUCCH and PDCCH) and information elements, can be identified by any suitable names, and various names assigned to these various channels and information elements are not limitative in any respect.

### (Base Station (Radio Base Station))

In the present disclosure, the IAB node has a function of the base station. The terms "Base Station (BS)," "radio base station," "fixed station," "NodeB," "eNodeB (eNB)," "gNodeB (gNB)," "access point," "transmission point," "reception point, "transmission/reception point," "cell," "sector," "cell group," "carrier," "component carrier," and the like may be used interchangeably. The base station may be called a macro cell, a small cell, a femtocell, or a pico cell.

The base station can accommodate one cell or a plurality of (e.g., three) cells. When the base station accommodates a plurality of cells, the entire coverage area of the base station can be divided into a plurality of smaller areas, and each of the smaller areas can provide a communication service based on a base station subsystem (e.g., small base station for indoor remote radio head (RRH)). The term "cell" or "sector" denotes part or all of the coverage area of at least one of the base station and the base station subsystem that perform the communication service in the coverage.

### (Terminal)

The terms "Mobile Station (MS)," "user terminal," "User Equipment (UE)," and "terminal" may be used interchangeably in the present disclosure.

The mobile station may be called, by those skilled in the art, a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or by some other appropriate terms.

### (IAB Node/Mobile Station)

At least one of the IAB node and the mobile station may be called a transmission apparatus, a reception apparatus, a communication apparatus, or the like. Note that, at least one of the IAB node and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). Note that, at least one of the IAB node and the mobile station also includes an apparatus that does not necessarily move during communication operation. For example, at least one of the IAB node and the mobile station may be Internet-of-Things (IoT) equipment such as a sensor.

The IAB node in the present disclosure may also be replaced with the user terminal. For example, the aspects/embodiments of the present disclosure may find application in a configuration that results from replacing communication between the IAB node and the user terminal with communication between multiple user terminals (such communication may, e.g., be referred to as device-to-device (D2D), vehicle-to-everything (V2X), or the like). In this case, terminal 20 may be configured to have the functions that the IAB node described above has. The wordings "uplink" and "downlink" may be replaced with a corresponding wording for inter-equipment communication (e.g., "side"). For example, an uplink channel, a downlink channel, and the like may be replaced with a side channel.

Similarly, the terminal in the present disclosure may be replaced with the IAB node. In this case, IAB node is configured to have the functions that terminal 20 described above has.

### (Meaning and Interpretation of Terms)

As used herein, the term "determining" may encompass a wide variety of actions. For example, "determining" may be regarded as judging, calculating, computing, processing, deriving, investigating, looking up, searching (or, search or inquiry)(e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming," "expecting," "considering," and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like hat are non-limiting and non-inclusive examples.

### (Reference Signal)

The reference signal can also be abbreviated as an RS and may also be called as a pilot depending on the applied standard.

### (Meaning of "Based on")

The description "based on" used in the present disclosure does not mean "based only on," unless otherwise specified. In other words, the description "based on" means both of "based only on" and "based at least on."

### ("First" and "Second")

Any reference to elements by using the terms "first," "second," and the like does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

### ("Means")

The "section " in the configuration of each apparatus may be replaced with "means," "circuit," "device," or the like.

### (Open-ended Format)

In a case where terms "include," "including," and their modifications are used in the present disclosure, these terms are intended to be inclusive like the term "comprising." Further, the term "or" used in the present disclosure is not intended to be an exclusive or.

### (Time Unit such as TTI, Frequency Unit such as RB, and a Radio Frame Configuration)

The radio frame may be constituted by one frame or a plurality of frames in the time domain. The one frame or each of the plurality of frames may be called a subframe in the time domain. The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, indicates at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM)) symbol, Single Carrier-Frequency Division Multiple Access (SC-FDMA) symbol, or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (e.g., 1 to 13 symbols) that is shorter than 1 ms, or a duration that is longer than 1 ms. Note that, a unit that represents the TTI may be referred to as a slot, a mini-slot, or the like instead of a subframe.

Here, the TTI, for example, refers to a minimum time unit for scheduling in radio communication. For example, in an LTE system, the IAB node performs scheduling for allocating a radio resource (a frequency bandwidth, a transmit power, and the like that are used in each user terminal) on a TTI-by-TTI basis to each user terminal. Note that, the definition of TTI is not limited to this.

The TTI may be a time unit for transmitting a channel-coded data packet (a transport block), a code block, or a codeword, or may be a unit for processing such as scheduling and link adaptation. Note that, when the TTI is assigned, a time section (for example, the number of symbols) to which the transport block, the code block, the codeword, or the like is actually mapped may be shorter than the TTI.

Note that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini slot, one subframe, or one TTI. One TTI and one subframe may be constituted by one resource block or a plurality of resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for certain numerology in a certain carrier. Here, the common RBs may be identified by RB indices that use a common reference point of the carrier as a reference. The PRB may be defined by a certain BWP and may be numbered within the BWP.

The BWP may include a UL BWP and a DL BWP. A terminal may be configured with one or more BWPs within one carrier.

At least one of the configured BWPs may be active, and the terminal does not have to assume transmission/reception of a predetermined signal or channel outside the active BWP. Note that, "cell," "carrier," and the like in the present disclosure may be replaced with "BWP."

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

In a case where articles, such as "a," "an," and "the" in English, for example, are added in the present disclosure by translation, nouns following these articles may have the same meaning as used in the plural.

In the present disclosure, the expression "A and B are different" may mean that "A and B are different from each other." Note that, the expression may also mean that "A and B are different from C." The expressions "separated" and "coupled" may also be interpreted in the same manner as the expression "A and B are different."

### (Variations and the like of Aspects)

The aspects and embodiments described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present disclosure. Modifications and variations of the aspects of the present disclosure can be made without departing from the spirit and the scope of the present disclosure defined by the description of the appended claims. Therefore, the description of the present disclosure is intended for exemplary description and does not limit the present disclosure in any sense.

### Industrial Applicability

An aspect of the present disclosure is useful for radio communication systems.

### Reference Signs List

10, 10A, 10B, 10C IAB node
20 Terminal
101 Control section
102 CU
103 MT
104 DU
510 Transmission section
520 Reception section
530 Configuration section
540 Control section

## Claims

1. A radio node, comprising:
a transmission section that reports, to a parent node, information indicating a simultaneous transmission in which transmission to the parent node and transmission to a child node or a terminal are simultaneously performed and/or a simultaneous reception in which reception from the parent node and reception from the child node or the terminal are simultaneously performed; and
a control section that controls the simultaneous transmission and/or the simultaneous reception in accordance with configuration made by the parent node in response to the information.

2. The radio node according to claim 1, wherein:
the transmission section reports, to the parent node, information indicating a report unit of the information; and
the control section controls the simultaneous transmission and/or the simultaneous reception further in accordance with a configuration unit of the simultaneous transmission and/or the simultaneous reception from the parent node in response to the information indicating the report unit.

3. The radio node according to claim 1, wherein:
the transmission section reports, to the parent node, information indicating a duration in which the information is reported; and
the control section controls the simultaneous transmission and/or the simultaneous reception that are/is included in a duration configured by the parent node in response to the information indicating the duration.

4. The radio node according to claim 3, wherein:
the transmission section reports, to the parent node, information indicating a starting position of the duration in which the information is reported; and
the control section controls the simultaneous transmission and/or the simultaneous reception that are/is included in the duration that starts from a starting position configured by the parent node in response to the information indicating the starting position.

5. The radio node according to claim 3, wherein the control section controls the simultaneous transmission and/or the simultaneous reception that are/is included in the duration which is successively repeated.

6. A radio communication method, comprising:
reporting, to a parent node by a radio node, information indicating a simultaneous transmission in which transmission to the parent node and transmission to a child node or a terminal are simultaneously performed and/or a simultaneous reception in which reception from the parent node and reception from the child node or the terminal are simultaneously performed; and
controlling, by the radio node, the simultaneous transmission and/or the simultaneous reception in accordance with configuration made by the parent node in response to the information.
